(19)

Europäisches
Patentamt
European
Patent Office
Office européen
des brevets

(11) **EP 2 821 754 A2**

(12) **EUROPEAN PATENT APPLICATION**

(43) Date of publication:
**07.01.2015 Bulletin 2015/02**

(51) Int Cl.:
*G01D 5/20* (2006.01)     *G01D 5/245* (2006.01)

(21) Application number: **14002097.5**

(22) Date of filing: **18.06.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **02.07.2013 GB 201311856**

(71) Applicant: **Gill Corporate Limited
New Milton, Hampshire BH25 6QJ (GB)**

(72) Inventors:
• **Gill, Michael John
  Beaulieu, Hampshire SO42 7XA (GB)**
• **Birtwell, Samuel William
  Lymington, Hampshire SO41 9LF (GB)**

(74) Representative: **Crouch, David John et al
Bromhead Johnson
Sovereign House
212-224 Shaftesbury Avenue
London WC2H 8HQ (GB)**

(54) **A position indicator device**

(57)    A position indicator device (10) comprising a first array (12) of uniformly spaced-apart pulse induction affecting targets fixed in position relative to a second array of uniformly spaced-apart pulse induction affecting targets (14). The spacing between the centres of adjacent targets of the first array (12) differs from that of the second (14). The device further comprises a first set (18) of pulse-induction coils comprising a plurality of such coils and a second set (20) of pulse-induction coils comprising a plurality of such coils. The coils of the first set (18) are fixed relative to those of the second set (20). Those of the first set (18) are located adjacent to the first array (12) of targets. Those of the second set (20) are located adjacent to the second array (14) of targets. The targets (the said first and second arrays together) and the coils (the said first and second sets together) are movable relative to one another. The device further comprises indicator circuitry (22) connected to the first and second sets (18 and 20) of pulse induction coils to provide a signal dependent upon the outputs thereof indicative of the position of the coils relative to the targets.

Also a position indicator device (10) comprising at least one pulse-induction affecting target (12), at least one pulse-induction coil (18), and pulse-induction indicator circuitry (22) connected to the said at least one pulse-induction coil (18) to provide a signal dependent upon the output thereof indicative of the position of the said at least one pulse-induction coil (18) relative to the said at least one pulse-induction affecting target (12). Metallic glass or amorphous metal is arranged to shield the said at least one pulse-induction affecting target (12) and/or the said at least one pulse-induction coil (18) from stray signals.

Fig. 5

EP 2 821 754 A2

**Description**

The present invention is directed to a position indicator device.

An example of a position indicator device is given in EP 1121572 B1. That specification describes the use of pulse induction to provide the position of a target relative to one or more coils. The self inductance of a coil is given by the equation:

$$v = L \cdot di/dt$$

in which v is the electrical voltage in volts across the coil, L is the self inductance of the coil, and i is the electrical current passing through the coil in amperes, so that di/dt is the rate of change of the electrical current passing through the coil as a function of time.

It can be seen from this that if the electrical current through the coil has a positive value as a result of a steady voltage applied across the coil, but is abruptly stopped by switching off the applied voltage, the voltage across the coil that results from the self inductance of the coil will have an extremely high negative value, well in excess of the value it had immediately prior to the instant at which the applied voltage is switched off and the current is stopped. The self inductance voltage will decay exponentially so that after a while it will have a substantially zero value. However, the exponential decay is dependent upon electrically conductive material in the vicinity of the coil. If there is an object made of an electrically conductive material close to the coil, this will lower the rate of decay of the voltage across the coil, because of the eddy currents induced in the object, and a measure of the value of the voltage at a time when, in the absence of any such object, it would be substantially zero, provides an indication of the proximity of the object, given that its size and electrical conductivity are known, or given that experiments are conducted to ascertain the different values of this voltage for different positions of the target. This method shall be referred to herein as pulse induction, pulse induction circuitry or a pulse induction circuit shall be understood as circuitry or a circuit adapted to carry out such a method, and a pulse induction coil shall be understood to mean a coil to which is connected a pulse induction circuit or circuitry.

A problem encountered with the device illustrated in EP 1121572 B1 is that the available movement of the target is limited by the coil or coils themselves.

The present invention seeks to obviate this problem.

Accordingly the present invention is directed to a position indicator device comprising a first array of uniformly spaced-apart pulse induction affecting targets fixed in position relative to a second array of uniformly spaced-apart pulse induction affecting targets, in which the spacing between the centres of adjacent targets of the first array differs from that of the second, the device further comprising a first set of pulse-induction coils comprising a plurality of such coils and a second set of pulse-induction coils comprising a plurality of such coils, with those of the first set fixed relative to those of the second set, those of the first set being located adjacent to the first array of targets, and those of the second set being located adjacent to the second array of targets, the first and second arrays of targets being movable relative to the coils of the first and second sets of pulse induction coils, the device further comprising indicator circuitry connected to the first and second sets of pulse induction coils to provide a signal dependent upon the outputs thereof indicative of the position of the coils relative to the arrays.

The pulse induction affecting targets may comprise portions of electrically conductive material. Such portions may be projections or protuberances which are integral with and extend away from a base portion of the same material.

Material which is electrically insulative relative to the said electrically conductive material, and which is magnetically permeable relative to the said electrically conductive material, may fill the spacing between the targets, and/or behind the targets. The electrically insulative magnetically permeable material may comprise metallic glass or amorphous metal.

Alternatively or in addition, the targets may comprise voids within a member or members of electrically conductive material.

Alternatively or in addition, the targets may comprise portions of material which have an electrical and/or magnetic parameter which is different from that of the material or void which surrounds the targets, provided the targets themselves and/or the material surrounding the targets are/is electrically-conductive.

It will be appreciated that it may be that the coils are moveable, or the target arrays are moveable, or that both are moveable relative to the surroundings of the device, provided relative movement between the coils and the target arrays is possible.

The first and second arrays of targets may both be linear and of the same overall length.

Alternatively, they may be circular arrays surrounding a common axis. The sets of coils may then be arranged outside, inside, or alongside those arrays. For example, the targets of the first and second arrays may comprise radially projecting portions of respective rings of electrically conductive material.

This enables the device to indicate the angle of rotation of a shaft, for example.

The number of targets in the first array may be different from the number of targets in the second array.

The number of targets in the first array may be one more than the number of targets in the second array.

The number of targets in the second array may be five.

The spacing between the respective centres of adjacent targets of the first array may be less than the spacing between the respective centres of adjacent targets of the second array.

The number of coils in the first and second sets may be three.

The coils of each set may be arranged linearly if the arrays are linear, or arcuately if the arrays are circular, concentrically therewith.

The spacing between the respective centres of the coils of the first and second sets may differ. For example, the spacing between the centres of adjacent coils of the said first set may be substantially one third the spacing between the centres of adjacent targets of the said first array. Also, for example, the spacing between the centres of adjacent coils of the said second set may be substantially one third of the spacing between the centres of adjacent targets of the said second array.

The said indicator circuitry may be such as to effect an algorithm to provide a sawtooth output for each set of coils. The algorithm may be as set out hereinbelow with reference to the accompanying drawings, or it may use a part of the algorithm set out hereinbelow with reference to the accompanying drawings.

The said indicator circuitry may effect an algorithm upon the sawtooth outputs to provide a linear output which varies in proportion to the distance of the coils from a given target. The algorithm may be as set out hereinbelow with reference to the accompanying drawings, or it may use a part of the algorithm set out hereinbelow with reference to the accompanying drawings.

The present invention further extends to a position indicator device comprising at least one pulse-induction affecting target, at least one pulse-induction coil, pulse-induction indicator circuitry connected to the said at least one pulse-induction coil to provide a signal dependent upon the output thereof indicative of the position of the said at least one pulse-induction coil relative to the said at least one pulse-induction affecting target, in which a material is arranged to shield the said at least one pulse-induction affecting target and/or the said at least one pulse-induction coil from stray signals, the said material being one which is electrically insulative relative to the material of the or each target and which is magnetically permeable relative to the or each target.

The shielding material may comprise metallic glass or amorphous metal.

This provides the advantage that in such a position indicator device, the or each such target may be mounted on a material which is different from that of the target itself, irrespective of whether the material on which the or each target is mounted is electrically conductive, because the metallic glass or the amorphous metal will shield the coil from any effect that would be present in the output in the absence of the metallic glass or the amorphous metal.

Such a position indicator device may incorporate one or more of the features set out hereinbefore in relation to the present invention or a development thereof.

The present invention extends to a control device for controlling an operating parameter of an engine or a machine or other equipment in accordance with the relative position between the coils and the targets of a position indicator device in accordance with the present invention.

The present invention also extends to an engine or a machine or other equipment provided with such a control device.

The present invention also extends to a method of indicating the position of one object relative to another using a position indicator device as set out in one or more of the foregoing paragraphs 8 to 29, and to a method of controlling a parameter of an engine or machine or other equipment using the device according to paragraph 30.

Examples of position indicator devices embodying the present invention will now be described in greater detail with reference to the accompanying drawings, in which:

Figure 1 is a diagrammatic plan view of a first embodiment of the present invention;
Figure 2 shows a block circuit diagram of circuitry which forms part of the first embodiment shown in Figure 1;
Figure 3 is an electrical block circuit diagram of a part of the electrical circuitry of Figure 2 shown in greater detail;
Figure 4 is an explanatory graph;
Figure 5 is a perspective view of a second embodiment of the present invention;
Figures 6 to 16 show respective explanatory graphs;
Figure 17 shows an explanatory diagram; and
Figure 18 shows a further explanatory graph.

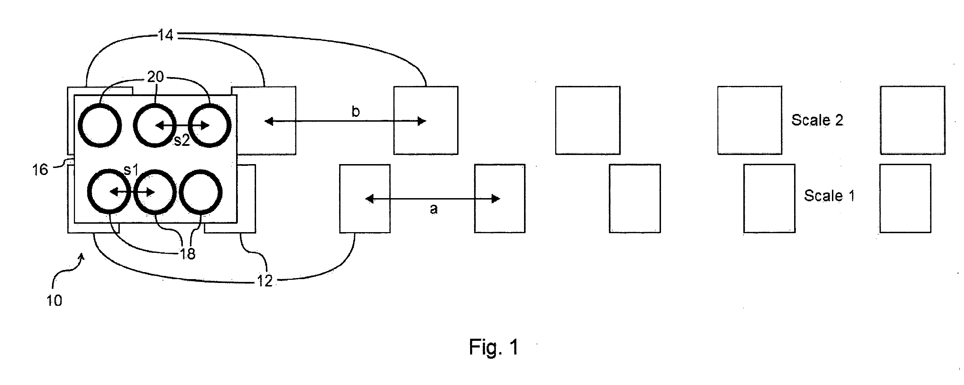

The position indicator device 10 shown in Figure 1 comprises a first array of uniformly spaced-apart electrically-conductive mild steel target members 12 and a second array of uniformly spaced-apart electrically-conductive mild steel target members 14. The first array of target members 12 is rigidly fixed relative to the second array of target members 14. There are seven target members 12, and six target members 14 in this particular embodiment, although other numbers of target members are possible.

The target members 12 of the first array are each generally elongate and the target members 14 of the second array are each generally square and each set is arranged linearly with the target members of each set being generally parallel to one another. The first and second arrays are parallel to one another and spaced apart from one another by a distance which is less than the length of each target member.

The outermost target members 12 of the first array are respectively broadly in registration with the outermost members 14 of the second array, so that the first array has generally the same length as the second array, but the spacing between adjacent target members 12 of the first array is less than the spacing between adjacent target members of the second array 14. Also, the spacing between the centres of adjacent target members of the first array 12 is less than the spacing between the centres of adjacent target members of the second array 14.

The device 10 further comprises a combined read head 16 which is positioned to overlap both the first array and the second array of target members. Fixed within the head 16 are a first set of pulse induction coils 18 comprising three coils 18 arranged linearly, parallel to and above the first array of target members 12, and a second set of pulse induction coils 20 comprising three coils 20 arranged linearly, parallel to and above the second array of target members 14.

The spacing between the centres of adjacent coils 18 of the first set is substantially one third of the spacing between the centres of adjacent target members 12 of the first array. The spacing between the centres of adjacent coils 20 of the second set is substantially one third of the spacing between the centres of adjacent target members 14 of the second array.

Each coil has an imaginary axis around which the coil is wound which extends generally towards and away from its associated array of target members.

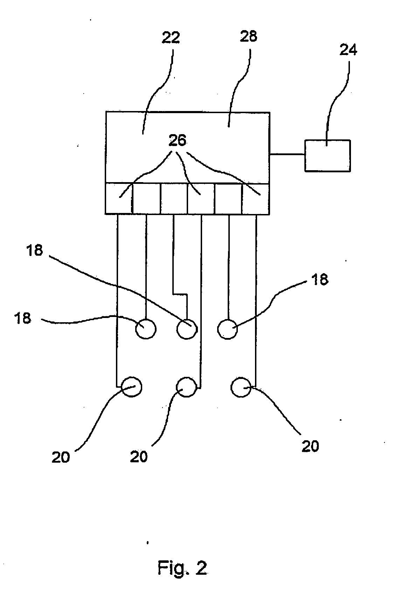

As is evident from Figure 2, all the coils 18 and 20 of the first and second sets are connected electrically to indicator circuitry 22 which in turn is connected to provide an output at output circuitry 24.

Thus the indicator circuitry 22 comprises respective pulse induction circuits 26 connected to the coils 18 and 20. The outputs from each of these circuits 26 are connected to respective inputs to an algorithm performing circuit 28 an output from which provides an indication of the relative position of the coils 18 and 20 in relation to the target members 12 and 14. That output from the algorithm performing circuit 28 is fed to an input of output circuit 24, the latter effecting a normalisation of the output from the algorithm performing circuit 28.

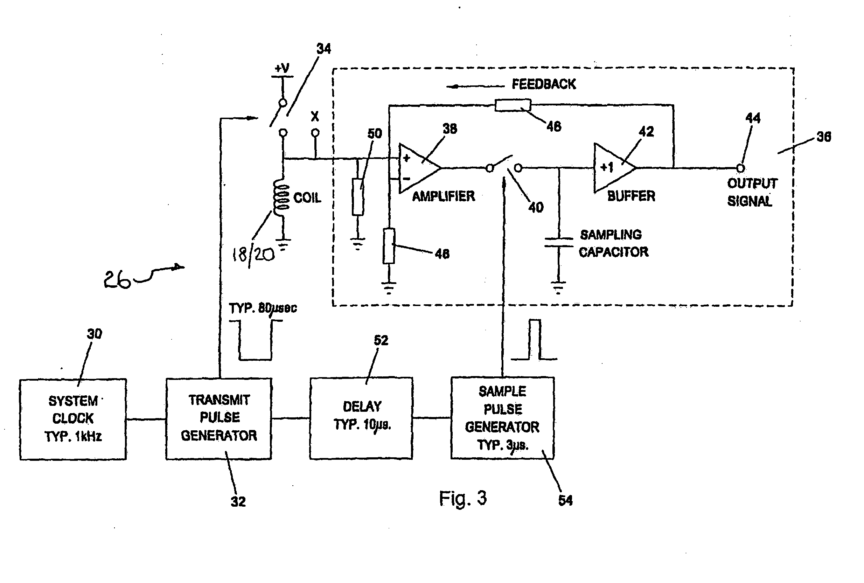

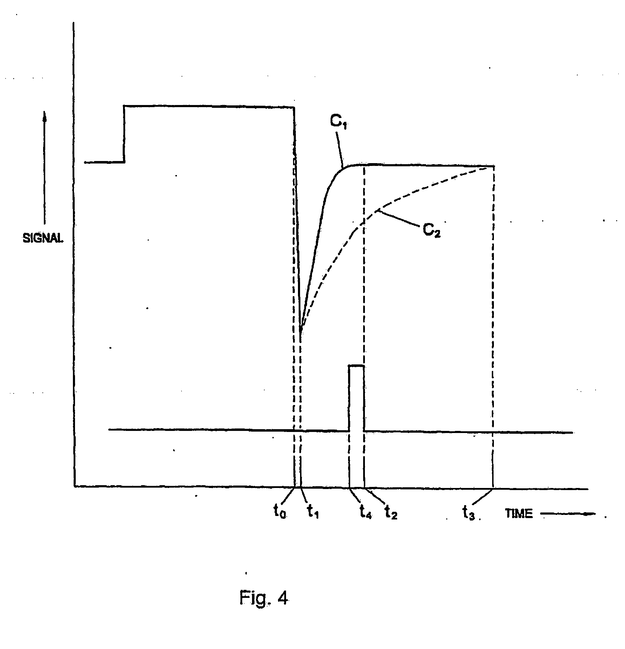

Each of the pulse induction circuits 26 is constructed and operated in the manner described in EP 1121572 B1, and more especially as illustrated with reference to the accompanying Figures 3 and 4.

The block circuit diagram shown in Figure 3 shows in greater detail the construction of each of the circuits 26. Thus it comprises a system clock 30 connected to deliver clock pulses to a pulse generator 32. This delivers a 12usec switching pulse to a switch 34 so that, during that time, the switch is closed and the voltage of about 3 volts is connected to one end of the coil 18 or 20 as the case may be, the other being earthed. Also connected across the coil are voltage measuring means 36 comprising a differential amplifier 38, a switch 40 and buffer amplifier 42 connected in series with one another with an output signal 44 being taken from the output of the buffer amplifier 42, the positive input to the differential amplifier being connected to the non-earthed end of the coil and the negative input of the differential amplifier being connected to a point between two series connected resistors 46 and 48 constituting a feedback from the buffer amplifier 42 and connected to earth. The positive connection to the differential amplifier 38 is also connected to earth by a resistor 50.

A time delay 52 is also connected to the pulse generator 32, and a pulse generator 54 generating a pulse of approximately 3usec is connected to receive a signal from a delay 52 and cause the switch 40 to be closed for that pulse period.

When the device 10 is in use, the system clock 30 causes the pulse generator 32 to close the switch 34 for a period of approximately 12usec. This energises the coil 18 or 20 for that period such that the voltage across the coil has a step function as shown in the graph in Figure 4. When this pulse ends at time t0 in Figure 4, the self-induction of the coil 18 or 20 causes the voltage across it to fall sharply to a negative value of a magnitude well in excess of the 5 volts it had initially, whereafter at time t1 it starts to rise again and to reach zero value at about time t2 following an exponential curve C1 between time t1 and t2. However, with the presence of an electrically-conductive target member 12 or 14, as the case may be, it follows the broken curve C2, in which the decay of a negative voltage across the winding 28 is slowed down so that the voltage does not come to zero value again until about time t3, well after time t2. The actual measure of this decay influence is measured by that part of the circuitry shown in the box 36 of Figure 3. Thus, the switch 40 receives the pulse which closes it for about 3usec, about 10usec after the coil 18 or 20 was de-energised (by which time the excitation energy has completely died away). This therefore provides a measure of the voltage across the coil 18 or 20 at time t4, about 20usec after time t0 and lasting for about a period of 3usec. It is dependent upon the position of the nearest target member or members 12 or 14, as the case may be.

The algorithm performing circuit 28 may be in the form of a microprocessor programmed to effect its function.

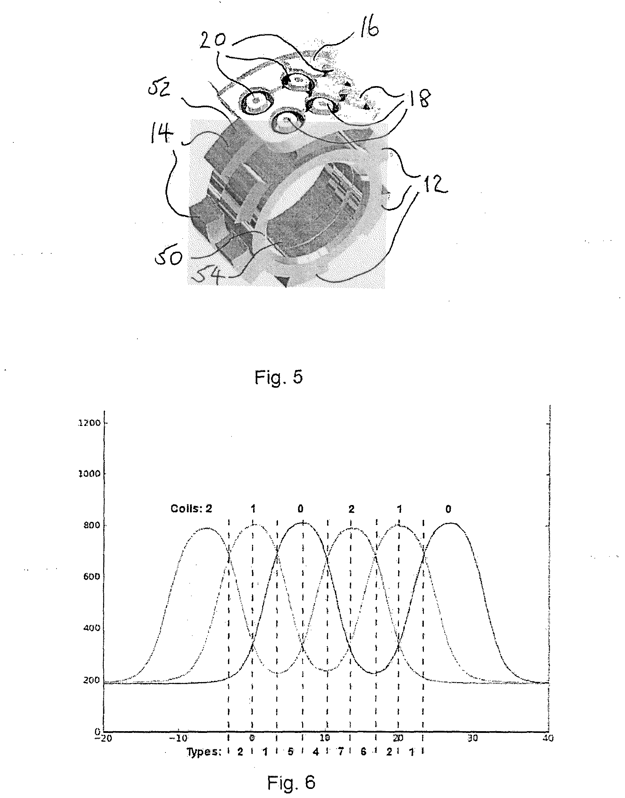

Figure 5 shows an alternative construction for the device. In this construction, the target members 12 of the first array are constituted by radially outwardly projecting arcuate portions of a first ring 50 of mild steel, and the target members 14 of the second array are constituted by radially outwardly projecting arcuate portions of a second ring 52 of mild steel which is coaxial with the first ring 50. The two rings are secured and fixed in position relative to one another by means of a spacer ring 54 sandwiched between the rings 50 and 52. The target members 12 are equiangularly spaced around the ring 50, and the target members 14 are equiangularly spaced around the ring 52. The radial depth of the projections 12 and 14 are substantially equal. However, there are six target members 12 and five target members 14, and because in this particular embodiment the lengths of the target members are substantially equal to the spacing between adjacent target members, the angles subtended by the portions constituting the target members 12 from the common axis are less than the angles subtended by the portions constituting the target members 14.

In the embodiment shown in Figure 5, the combined read head 16 is arcuate, lying on an imaginary cylinder which is concentric with the common axis of the rings 50 and 52. The head 16 is located so that it has portions which are adjacent to one or more of both sets of target members 12 or 14 which are for the time being underneath the head 16. As with the linear arrangement shown in Figure 1, the head 16 is provided with a first set of coils 18 arranged to be adjacent to one or more of the target members 12 for the time being underneath the head 16, and a second set of coils 20 arranged to be adjacent to one or more of the target members 14 for the time being underneath the head 16.

The rings 50 and 52 and the head 16 are held in such a fashion that the latter is movable relative to the former about their common axis. The actual parts to which the rings 50 and 52 and the head 16 are actually attached are not illustrated, as these may be many and varied. However one example might be that the rings 50 and 52 are secured to a shaft which is coaxial with them, the shaft may be rotatable about that axis, and the head 16 may be fixed in position (although movable relative to the rings 50 and 52 by virtue of their rotation), to provide an indication of the current angular position of the shaft.

The manner of operation of the position indicator circuitry 28 is shown in Figures 6 to 16.

Considering first the graph shown in Figure 6, this represents the outputs of the pulse induction circuits 26 of the three coils of the first or the second set of coils. The vertical axis of this graph represents the strength of the signal, and the horizontal axis represents the relative position of the coils relative to the target members. Each output as a function of position is broadly sinusoidal. The outputs shown in Figure 6 corresponds to a movement of each coil over two target members. The sinusoidal curve at the extreme left of the graph represents the output from the coil (referred to as coil 2 in the graph) arranged at one end of the set of coils, the curve next to this in a rightward direction represents the output from the coil (referred to as coil 1 in the graph) in the middle of the set, and the curve to the extreme right of the graph represents the output from the coil (referred to as coil 0 in the graph) at the other end of the set of coils.

Underneath the horizontal axis of the graph shown in Figure 6 is shown a number of different types of condition of the coil outputs. These types are defined as follows, in which amx is the number of the coil for the time being providing the greatest output:

if amx = 1 and coil 0 >= coil 2 then type 1
if amx = 1 and coil 0 < coil 2 then type 2
if amx = 0 and coil 2 >= coil 1 then type 4
if amx = 0 and coil 2 < coil 1 then type 5
if amx = 2 and coil 1 >= coil 0 then type 6
if amx = 2 and coil 1 < coil 0 then type 7
in which coil x represents the value of the output from circuit 26 of coil x.

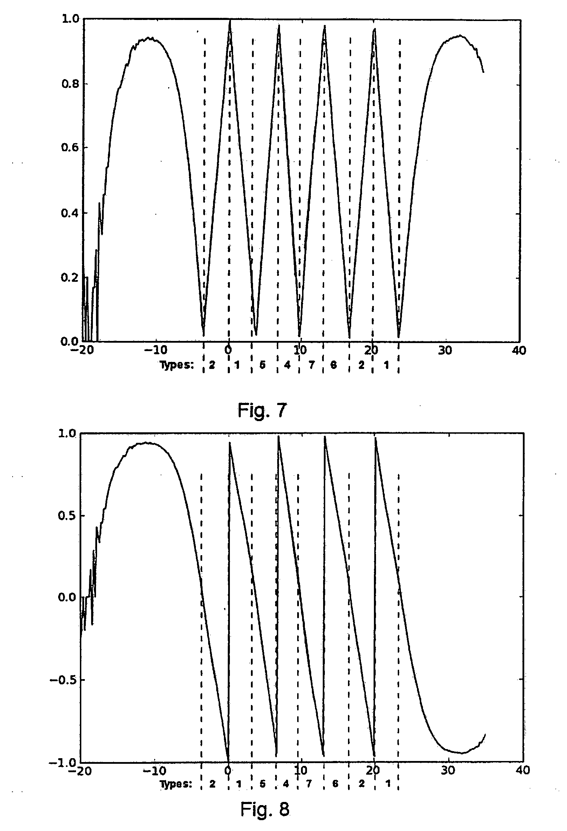

The algorithm performing circuit 28 then provides an output Px as indicated in Figure 7 by performing the following calculations in accordance with the type x of the condition of the coil outputs as follows:

for type 1:P1=(coil 1- coil 0)/(coil 1- coil 2)
for type 2:P2=(coil 1- coil 2)/(coil 1- coil 0)
for type 4:P4=(coil 0- coil 2)/(coil 0- coil 1)
for type 5:P5=(coil 0- coil 1)/(coil 0- coil 2)
for type 6:P6=(coil 2- coil 1)/(coil 2- coil 0)
for type 7:P7=(coil 2- coil 0)/(coil 2- coil 1)

The algorithm performing circuit 28 then multiplies the outputs in the regions corresponding to types two, five and seven by -1, to obtain the output as indicated in the graph of Figure 8.

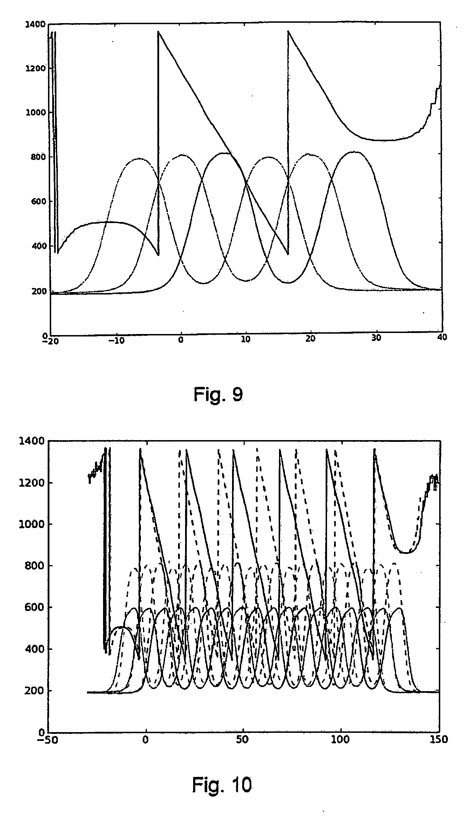

Offset values are then applied to each type, to form a single straight line or linear output over a distance of movement corresponding to the spacing between adjacent target members. This is achieved by way of the following calculations to give an output Qx as shown by the graph of Figure 9, in which the final output is scaled over the individual outputs of the pulse induction circuits 26 of the coils:

for type 1: Q1 = 6 + P1
for type 2: Q1 = 8 - P2
for type 4: Q1 = 4 + P4
for type 5: Q1 = 6 - P5
for type 6: Q1 = 2 + P6
for type 7: Q1 = 4 - P7

For the full range of movement of a combined read head 16 over the two arrays of target members 12 and 14, in which there are seven target members 12 and six target members 14, the resulting output from the algorithm performing circuit 28 is as shown in Figure 10, in which the resulting output is superimposed over the individual outputs from the pulse induction circuits 26 for each of the coils 18 and 20. In this case, there are seven peaks for the output shown in broken lines corresponding to that from the target members 12, and six peaks of the output shown in continuous lines corresponding to that for the array of target members 14.

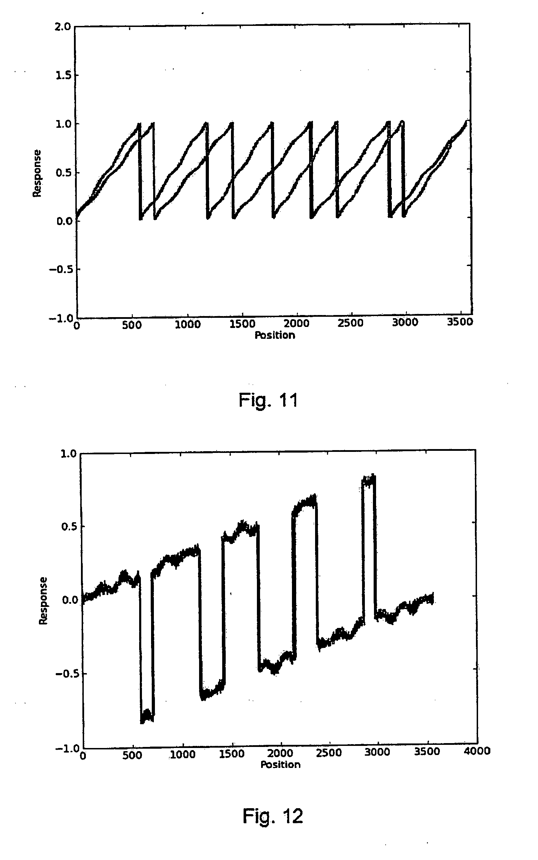

The actual resulting output from the algorithm performing circuit 28 may appear as shown in Figure 11 which has a number of peaks corresponding to the number of target members in the embodiment shown in Figures 1 and 5, the output in this case being normalised so that it extends from the value 0 to the value 1. The output shown with six peaks, and that shown with five peaks, corresponding respectively to the six target members of the first array and the five target members of second array.

The algorithm performing circuit 28 subtracts one of the sawtooth outputs shown in Figure 11 from the other to obtain an output shown in Figure 12. More especially if a(x) represents the function shown in broken lines in Figure 11, and b(x) represents the function shown in continuous lines, and the output shown in Figure 12 is obtained by the function:

$$s(x) = a(x) - b(x)$$

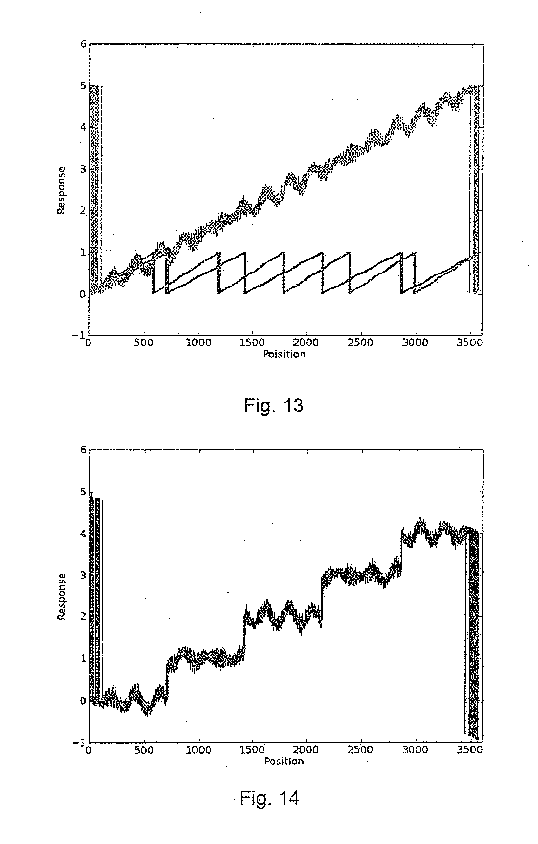

The amplitude of the sawtooth functions in Figure 11 has been normalised to the value 1, so that any value of s (x) which has a negative value can have the value one added to it, to convert s(x) into a generally linear function with a given gradient. To bring this gradient into line with the gradient of this slopes in one of the sawtooth functions, the values of s(x) can be multiplied by the number of target members associated with the coils giving rise to that sawtooth output. For example, to equate the gradient with the sawtooth output from the coils 20, the output s(x) can be multiplied by 5. By doing so, an output is obtained within the algorithm performing circuit 28 as shown in Figure 13.

Because this roughly linear output is created by subtracting two signals which already have a relatively high proportion of noise superimposed on what ideally would be precisely linear signals, the roughly linear output is extremely noisy and it is clearly desirable for the sake of accuracy to improve its precision. This is effected within the algorithm performing circuit 28 firstly by obtaining course steps, to determine where the position of the head 16 is in terms of those adjacent target members 14 between which its centre lies. This is achieved by subtracting the sawtooth signal obtained from the outputs of the coils 20 from the roughly linear output shown in Figure 13. This results in the output shown in Figure 14.

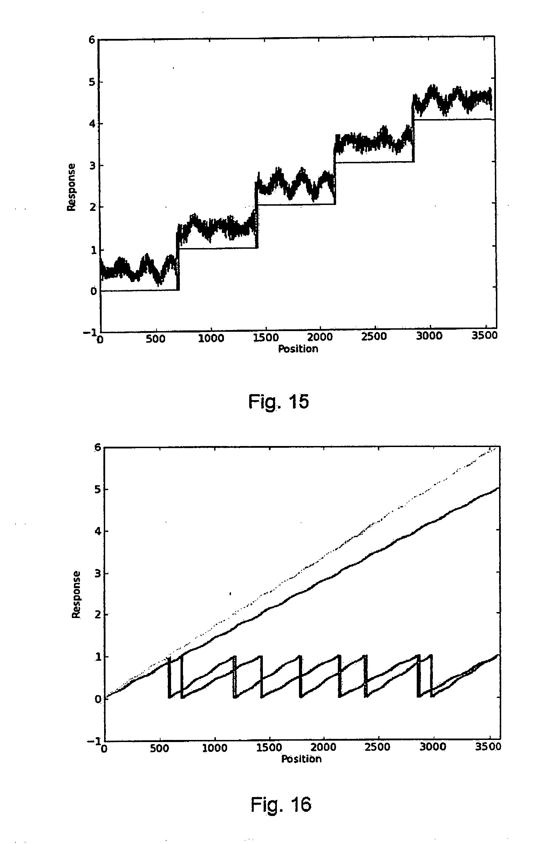

Approximately half the peak value of the sawtooth functions (in this case approximately 0.5) is added to the function shown in Figure 14, and from this a clean step function is obtained from the integer which is the lower of the two between which the noisy function lies for any given value of position. This clean step function is as shown in Figure 15. With this clean step function added to the corresponding sawtooth function, a substantially linear output for the full range of available movement of the head 16 relative to the target members 12 or 14 is obtained with relatively little noise, as shown in Figure 16. This shows a linear response obtained from two sets of coils 18 and 20. The higher gradient line is the linear output obtained from coils 18, and the lower gradient line from the coils 20. In practice, one or other of these generally linear responses is more linear than the other, and it is the one that is more linear that is selected to provide an indication of the position of the head 16 relative to the arrays of target members.

Numerous variations and modifications to the illustrated devices may occur to the reader without taking the resulting construction outside the scope of the present invention. By way of example only, there may be seven target members 12 in the first array, and six in the second array, and indeed there may be substantially any integral number of target members in the first array with one or more less in the second array, provided that the noise of the signals obtained does not prevent a resolution of the position of the head 16. Algorithms might be used to enable there to be only two coils in each set, or there may be four or more. However a greater degree of precision might be obtained by using signals from more than three coils in each set. The target members may comprise copper instead of mild steel, for example by wrapping a strip of material comprising copper portions alternating with electrically insulative portions around the outside cylindrical surface of a hollow cylinder of mild steel.

The regions between and behind the targets 11 and 14, or between and behind such copper portions, may be filled with metallic glass or amorphous metal, so that the targets remain insulated from one another but steel for example behind the metallic glass or amorphous metal does not adversely affect the outputs of the coils 18 and 20.

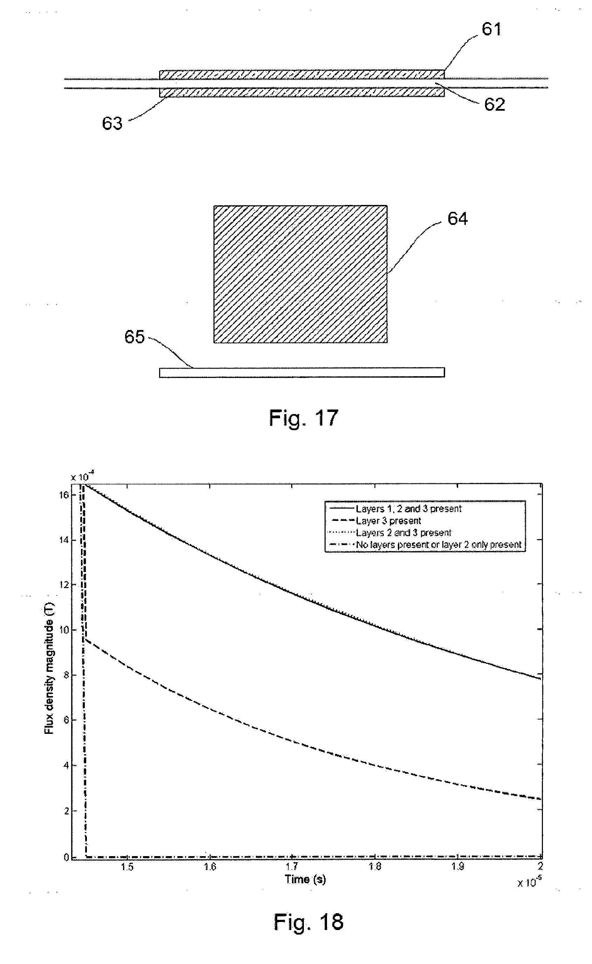

The metallic glass or amorphous metal may be in the form of a layer, for example. In this case the layer insulates the targets from each other and shields the coils from the effective any electrically conductive material behind one or more of the targets. An example configuration with a single coil 64, two copper layers comprising a target 63 and a second copper layer 61 which is to be excluded from detection, and a metallic glass layer 62 (which could alternatively be a layer of amorphous metal) sandwiched between the two copper layers 61 and 63 and extending therebeyond, is shown in Figure 17. The coil 64 is located on that side of the layer of metallic glass 62 on which is located the target 63, but spaced therefrom. A further layer of metallic glass 65 is located on that side of the coil 64 further from the target 63. The coil 64 is connected in circuitry as shown in Figure 3, in which the coil is labelled 18/20.

The magnetic field at the coil centre immediately after the trailing end of a pulse put through the coil by the pulse-induction circuit, plotted as a function of time, is shown in solid line in Figure 18. In this regard the magnetic field at the coil centre integrated over a given time interval is proportional to the signal strength from the coil.

It can be seen from Figure 18 that if the experiment is repeated with only the copper layer 61 removed, with the copper layer 63 remaining, the function remains the same, that is to say the layer of metallic glass 62 shields the coil 64 from any effect that it would be subject to from the copper layer 61 in the absence of the metallic glass 62.

It can further be seen from Figure 18 that if the experiment is repeated with both the copper layers 61 and 63 removed, the function of the magnetic field of the coil centre as a function of time sharply drops to zero and remains at zero. This is so regardless of whether the metallic glass layer 62 is present, so clearly the latter by itself has no effect on the output.

Figure 18 also shows that if the copper layer 61 and the metallic glass layer 62 are removed, the function falls sharply immediately following the trailing edge of the pulse, before it commences an exponential decay at a position well below the level of the function with the copper layer 61 present at which exponential decay commences. This shows that the metallic glass layer 62 enhances the effect of the copper layer 63 on the measurement made by the coil 64.

Clearly, the metallic glass layer 65 shields the coil 64 from the effect of any electrically conductive material that may be behind that layer 65.

Stated briefly, the metallic glass (or amorphous metal) shields the effect on the coil output of any electrically conductive material which is behind the metallic glass (or amorphous metal), relative to the coil, but enhances the effect of any electrically conductive material which is in front of it.

**Claims**

1. A position indicator device (10) comprising a first array (12) of uniformly spaced-apart pulse induction affecting targets fixed in position relative to a second array (14) of uniformly spaced-apart pulse induction affecting targets, **characterised in that** the spacing between the centres of adjacent targets of the first array (12) differs from that of the second (14), the device (10) further comprising a first set (18) of pulse-induction coils comprising a plurality of such coils and a second set (20) of pulse-induction coils comprising a plurality of such coils, with those of the first set (18) fixed relative to those of the second set (20), those of the first set (18) being located adjacent to the first array (12) of targets, and those of the second set (20) being located adjacent to the second array (14) of targets, the targets (the said first and second arrays (12 and 14) together) and the coils (the said first and second sets (18 and 20) together) being movable relative to one another, the device (10) further comprising indicator circuitry (22) connected to the first and second sets (18 and 20) of pulse induction coils to provide a signal dependent upon the outputs thereof indicative of the position of the coils relative to the targets.

2. A position indicator device (10) according to claim 1, **characterised in that** the pulse induction affecting targets (12 and 14) comprise portions of electrically conductive material.

3. A position indicator device (10) according to claim 2, **characterised in that** those portions are projections or protuberances which are integral with and extend away from a base portion (50, 52) of the same material.

4. A position indicator device (10) according to claim 2, **characterised in that** material (62), which is electrically insulative relative to the electrically conductive material, and which is magnetically permeable relative to the said electrically conductive material, fills the spacing between the targets (63), and/or behind the targets (63).

5. A position indicator device (10) according to claim 4, **characterised in that** the electrically insulative magnetically permeable material (62) comprises metallic glass or amorphous metal.

6. A position indicator device (10) according to any preceding claim, **characterised in that** the first and second arrays (12 and 14) of targets are both circular arrays surrounding a common axis, and in **in that** the coils of each set (18 and 20) are arranged arcuately, concentrically with the arrays (12 and 14).

7. A position indicator device (10) according to any preceding claim, **characterised in that** the spacing between the centres of adjacent coils (18) of the said first set are substantially one third the spacing between the centres of adjacent targets of the said first array (12), and **in that** the spacing between the centres of adjacent coils of the said second set (20) are substantially one third of the spacing between the centres of adjacent targets of the said second array (14) .

8. A position indicator device (10) according to any preceding claim, **characterised in that** the said indicator circuitry (22) is such as to effect an algorithm to provide a sawtooth output for each set of coils (18,20).

9. A position indicator device (10) according to claim 8, **characterised in that** the said indicator circuitry (22) effects an algorithm upon the sawtooth outputs to provide a linear output which varies in proportion to the distance of the coils (18, 20) from a given target.

10. A position indicator device (10) comprising at least one pulse-induction affecting target (63), at least one pulse-induction coil (64), and pulse-induction indicator circuitry connected to the said at least one pulse-induction coil (64) to provide a signal dependent upon the output thereof indicative of the position of the said at least one pulse-induction coil (64) relative to the said at least one pulse-induction affecting target (63), **characterised in that** a material (62) is arranged to shield the said at least one pulse-induction affecting target (63) and/or the said at least one pulse-induction coil (64) from stray signals, the said material (62) being one which is electrically insulative relative to the material of the or each target (63) and which is magnetically permeable relative to the or each target (63) .

11. A position indicator device (10) according to claim 10, **characterised in that** the shielding material (62) comprises metallic glass or amorphous metal.

12. A control device for controlling an operating parameter of an engine or a machine or other equipment in accordance with the relative position between the coil or coils (18,20) and the target or targets (12,14) of a position indicator device (10) as claimed in any preceding claim.

13. An engine or a machine or other equipment provided with a control device as claimed in claim 12.

14. A method of indicating the position of one object relative to another using a position indicator device (10) as claimed in any one of claims 1 to 11.

15. A method of controlling a parameter of an engine or machine or other equipment using a control device as claimed in claim 12.

Fig. 1

Fig. 2

Fig. 3

Fig. 4

Fig. 5

Fig. 6

Types: 2 | 1 | 5 | 4 | 7 | 6 | 2 | 1

Fig. 7

Types: 2 | 1 | 5 | 4 | 7 | 6 | 2 | 1

Fig. 8

Fig. 9

Fig. 10

Fig. 11

Fig. 12

Fig. 13

Fig. 14

Fig. 15

Fig. 16

Fig. 17

Fig. 18

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1121572 B1